(19) **Europäisches Patentamt / European Patent Office / Office européen des brevets**

(11) **EP 1 315 960 B1**

(12) **EUROPEAN PATENT SPECIFICATION**

(45) Date of publication and mention
of the grant of the patent:
**03.06.2009 Bulletin 2009/23**

(21) Application number: **01958769.0**

(22) Date of filing: **13.08.2001**

(51) Int Cl.:
*G01N 22/00* (2006.01)     *G01N 22/04* (2006.01)

(86) International application number:
**PCT/SE2001/001740**

(87) International publication number:
**WO 2002/014848 (21.02.2002 Gazette 2002/08)**

(54) **A METHOD AND DEVICE FOR MEASURING MOISTURE CONTENT DURING OPTIMISING OF A DRYING PROCESS**

VERFAHREN UND EINRICHTUNG ZUR MESSUNG DES FEUCHTIGKEITSGEHALTS WÄHREND DER OPTIMIERUNG EINES TROCKENPROZESSES

PROCEDE ET DISPOSITIF DE MESURE DE LA TENEUR EN HUMIDITE PENDANT L'OPTIMISATION D'UN PROCEDE DE SECHAGE

(84) Designated Contracting States:
**AT BE CH CY DE DK ES FI FR GB GR IE IT LI LU MC NL PT SE TR**
Designated Extension States:
**LT LV**

(30) Priority: **16.08.2000 SE 0002933**

(43) Date of publication of application:
**04.06.2003 Bulletin 2003/23**

(73) Proprietor: **ABB AB**
**721 83 Västerås (SE)**

(72) Inventors:
• **CLAESSON, Brith**
**S-722 23 Väster s (SE)**

• **GÄFVERT, Uno**
**S-723 49 Väster s (SE)**
• **BACKA, Stefan**
**S-723 45 Väster s (SE)**

(74) Representative: **Dahlstrand, Björn et al**
**ABB AB**
**Intellectual Property**
**Ingenjör Bååths Gata 11**
**721 83 Västerås (SE)**

(56) References cited:
EP-A1- 0 971 227      WO-A1-98/39639
GB-A- 2 112 148      US-A- 4 789 820

## Description

TECHNICAL FIELD

The invention relates to a method of measuring the moisture content during drying of an organic material, in which the moisture content in the material is determined based on the dielectric properties of the material and in which electromagnetic radiation is emitted towards the surface of the material, and the determination of the moisture content is performed based on the effect that the material has on said electromagnetic radiation.

The invention also relates to a device for measuring the moisture content during the drying of an organic material, said device being provided with means for determining the moisture content in the material based on the dielectric properties of the material, said means comprising means for emitting electromagnetic radiation towards a surface of the material, and the determination of the moisture content being executed based on the effect that the material has on said electromagnetic radiation.

The invention is applicable to all types of drying by which the material that is to be dried has such dielectric properties that it will effect the electromagnetic radiation that is directed towards it. The invention is primarily intended for the drying of an organic material of biological origin, such as wood, peat or biomass.

The invention primarily relates to measuring by means of non-contact methods in which the measurement is executed at one or more locations in a load of material. Preferably, the measurement comprises so-called bulk measurement for the purpose of determining one or more bulk parameters of the material in question.

BACKGROUND OF THE INVENTION AND PRIOR ART

In connection with the drying of organic material of biological origin, it is often of advantage to be able to determine or estimate the moisture content of the material continuously or continually during the drying process.

As an example, drying of wood should be mentioned. Drying of wood is a process by which the process economy has to be optimised with regard to the wood quality. If the drying is too fast, the wood might crack and twist while, on the other hand, a slow drying is not desirable from an economical point of view. In order to optimise the drying process and to be able to produce wood of a high quality it is, therefore, desired that the moisture content and wood structure is determined. Wood structure is here referred to as the effect that growth has on the structure of wood, where a slow grow results in a compact wood structure and a rapid growth results in a more porous wood structure. The moisture content and the wood structure can be determined by using the effect that the dielectric properties of the wood have on the electromagnetic radiation, particularly a spectrum of radio frequency radiation. Moisture content and wood structure is often used for optimising the drying process. Either, a drying scheme is calculated with predetermined variations of moisture and temperature over time based on specific quality parameters (an important such parameter is the moisture content), or the determined quality parameters (moisture and wood structure) are used in order to predict a suitable moisture and temperature profile that is maintained during the drying process. The drying process is controlled in order to follow a predetermined profile while the moisture content in the wood is continually supervised or supervised by means of discrete measurement by means of radio frequency radiation, deviations between measured values and the predicted moisture content of the wood resulting in control signals used for controlling the process.

Normally, the moisture and the wood structure are determined by means of measurements in the drying oven, the drying room or the autoclave, while an evaluating unit and a control unit may be comprised in a conventional process computer equipped with software that comprises those algorithms that are required for controlling the process. The evaluating unit may be adapted to process data input by means of multivariate analysis methods in order to produce a correlation between these data inputs and a quality parameter such as the moisture content of the material in question.

The above-described way of measuring the moisture content by means of radio frequency radiation is described in the Swedish patent application No. 9700828-8 of the applicant, and the principles for the drying of wood that are disclosed in that application are directly applicable also to the present invention.

From an economical and process technical point of view, it is desirable to be able to dry for as long as possible with an effect as large as possible in order to move over to drying with a lower effect just at the correct moment before the moisture content in the material has gone below a specific minimum value. In the case of drying of wood, the time for obtaining a so-called fibre saturation in the material and the required final moisture content plays a vital role as to how different drying parameters (primarily added heat) are to be controlled during the drying process. An optimisation of the control is desirable, and it is of substantial importance that the moisture content determinations that are continually performed and that form the basis of the control are correct and reflect the true conditions in the material well.

According to prior art, another way of measuring the moisture content of wood is to measure the moisture content in the air in the drying room while, at the same time, the energy used for the drying is registered. However, this technique results in a pretty inexact indication of the moisture content in the material.

Prior art that comprises contacting the material during the measurement has the disadvantage of only resulting in local measurement of less accuracy, while, at the same time, it requires further work operations in order to apply and remove the measuring units from the material.

THE OBJECT OF THE INVENTION

The object of the present invention is to provide a reliable method and an uncomplicated device for continuously or continually performing a determination of the moisture content of a material that is subjected to a drying operation in a drying process, and to optimise the control of the drying process based on such a determination. The measuring method must be a non-contact method and permit determination of the bulk moisture content of the material.

SUMMARY OF THE INVENTION

The object of the invention is achieved by means of the initially defined method, **characterised in that** a change of the effect of the electromagnetic radiation of the material versus time is detected and that data input to a mathematical model for the determination of the moisture content of the material during the drying is determined from the amount of energy consumed for evaporation of liquid in connection to the drying process during a given time period.

By connecting the moisture content measured by means of the electromagnetic radiation to the amount of energy that has been used for the evaporation of a certain amount of liquid, a more accurate determination of the actual moisture content in the material is permitted.

By taking into consideration the energy that has been used, better determination of the material properties can be made, which is utilised for the adjustment of the model that predicts the moisture content in the material during the remaining part of the process. Preferably, a plurality of measuring antennas is used. These antennas are positioned or directed for the measurement of different parts of the load of material in order to deliver a plurality of local deliveries and give an indication of the moisture condition in different parts of the load of material.

Preferably, said data input comprises an adjustment parameter JP obtained in accordance with:

$$JP = f(\text{spectral data, } Fk_{in}, \text{ energy } (\Delta E)$$

where $FK_{in}$ is the initial moisture ratio of the drying load. $FK_{in}$ is measured in a laboratory or is determined by means of a model built from a plurality (m) of spectral data measurements on a plurality of drying loads, and based on data input for moisture ratio established in laboratory measurements. The model for determining $Fk_{in}$ preferably has the following form:

$$Fk_{in} = f(\text{spectral data } (1\text{-}m), \text{ further data input})$$

where further data input are related to at least one of wood type, drying load volume and wood dimension.

The model into which the adjustment parameter JP is introduced as data input is a model of the type:

$$\text{Moisture ratio} = f(\text{spectral data, } Fk_{in}, JP, \text{ other input})$$

where other input are related to at least any one of wood type, drying load volume, wood dimension, drying temperature and air flow in the drying chamber. Accordingly, this model gives the moisture ratio of the drying load, said moisture ratio forming data output that can then form data input in already existing control models for the control of one or more process parameters. By means of this model, that takes into consideration also the energy that has been used for a certain evaporation, the moisture ratio can be determined with several times better accuracy. Without taking the adjustment parameter JP into consideration, a relative accuracy of approximately +/-20% is typically achieved, while, by means of the above-mentioned model for the determination of JP and fine adjustment of this model, a relative accuracy of approximately +/-5% can be achieved.

The proportion of free and bound water, respectively, changes as time passes. According to the invention, a model that is adjusted to the case of free water in the material is built. For this model, only the effect of the material on a certain part of the emitted frequency spectra needs to be taken into consideration, that is, the effect of the material on a specific, predetermined part of the frequency spectrum is used as data input in the model. Another model is built for the case of only, or nearly only, bound water in the material. Data input to this model primarily includes the effect of the material on another part of the emitted frequency spectrum and in the case of free water. The different parts of the spectrum may overlap each other, but the most important parts during the measurements of free and bound water are not identical.

The parameters within parentheses in the above models form examples of preferred data input to each model, respectively, in the case of drying of timber. It should be realised that they can be supplemented with further material parameters if required.

The time period mentioned is preferably a period during which generally all energy consumed for drying is also consumed for the evaporation of liquid present in the material.

In normal cases in which the air humidity during that same period is generally constant, said time period is a period during which the temperature in the material is generally constant by a constant delivery of energy/time unit.

Said time period is before the point at which fibre saturation appears in the material.

Preferably, said time period is within an initial portion of the time period within which generally all energy consumed for the drying is also consumed for the evaporation of liquid present in the material and/or during which the temperature in the material is generally constant when added energy/time is constant.

Preferably, the electromagnetic radiation comprises a known first frequency spectrum that is continuously or continually compared to a second frequency spectrum formed by the effect of the material on the first frequency spectrum. The first frequency spectrum essentially comprises wave lengths within the frequency range of 1-1000 mHz, preferably within the range of 1-500 MHz, and most preferably within the frenquency range of 10-250 MHz.

According to one embodiment, the radiation reflected from the material is detected and compared to the radiation emitted towards the material in order to identify the effect of the material on the radiation or, more precisely, the absorption of the electromagnetic field by the material.

Alternatively, or as a supplement, the radiation or electromagnetic field transmitted through the material is detected and compared to the emitted radiation in order to establish the effect of the material on the radiation.

The material is of biological origin and preferably comprises wood, preferably intended to be used as building timber.

The invention also relates to the initially defined device, which is **characterised in that** it comprises

- means for detecting a change of the effect of the material on the electromagnetic radiation during time, and
- means for establishing data input into a mathematical model for determining the moisture content of the material during the drying based on the amount of energy consumed for evaporation of liquid under a given time period during the drying process.

Said data input corresponds to the adjustment parameter JP that has been discussed above and which is used for trimming the mathematical model for the determination of the moisture ratio. The means for establishing the adjustment parameter JP comprise relevant program sequences in a computer program stored on a memory and connected to a processor in which they are executed. Data output from the mathematical model described above are sent as data input to any device for the control of process parameters based on this data input.

The means for emitting radiation towards the material comprises one or more antennas, each arranged to emit radiation of a known frequency spectrum towards the material. Preferably, the antennas are wide band antennas. Preferably, the antennas are arranged in order to enable measurement of the whole or parts of the drying volume.

The means for determining the moisture content preferably comprises means for detecting the radiation reflected by or transmitted through the material, and a unit for continuous or continual comparison of differences between spectral data for each emitted frequency spectrum and spectral data for the corresponding reflected or transmitted frequency spectrum, and evaluation of these differences for the purpose of determining the moisture content of the material. These means preferably comprise electronic means for dielectric spectroscopy.

The detecting means may be the same antennas as those that emitted the radiation, or separate antennas arranged for receiving, primarily, the transmitted radiation. Preferably, the antennas used have higher natural frequency than those frequencies that are within the used frequency spectrum. It should be realised that the term antenna should be regarded in a wide sense, and that it can comprise all types of elements, electrodes or the like from which electromagnetic radiation can be emitted and/or received.

It is commonly known that a plurality of parameters can be simultaneously determined by correlating a plurality of measured values to each other by means of algorithms, statistical models and data analysis methods such as Partial Least Square regression (PLS), principle component analysis (PCA), multi linear regression analysis (MLR) and neural networks. Normally, the models and algorithms that are used for the data analysis are created and calibrated by means of calibration and reference measurements that are performed for a plurality of reference samples with known quality-determining properties, quality parameters. These data analysis methods and other methods for multi variate data analysis by which the measured values are correlated against parameters in order to determine a plurality of independent parameter values from a relatively delimited number of values is common technique that is known per se and used within the area of chemistry, and in particular within the area of chemical analysis. Hereinafter in this application these methods will be referred to as "multivariate correlation", and a calibration based on such a method will be referred to as "multivariate calibration".

The unit for establishing the mathematical model or models for controlling the drying process preferably comprises a neural network and/or an electronic unit equipped with a software for, for example, Partial Least Square regression, PLS. The input to the multivariate correlation comprises the detected change of the moisture content in the material that is dried, and the amount of energy that has been consumed for the drying during the time period for which the difference in moisture content has been established. By means of this technique, a model is created for the moisture content and the change thereof in the material during the drying process. In the case of building timber, the time when fibre saturation can be expected to be obtained is determined as well as the final content of moisture in the wood. The process is then controlled with regard to this result. The models that the device is arranged to establish and to comprise have already been described above in connection with the disclosure of the inventive method.

EXAMPLE

Hereinafter, the invention will be described with reference to a preferred embodiment focused on the drying of building timber.

In order to optimise the timber drying process it must be possible to measure the moisture content on line and with great accuracy, in particular in the case when the timber approaches fibre saturation. One must also be able to determine the final moisture content in the material, the final content.

The measuring of the moisture content/ratio is performed by means of dielectric spectroscopy in accordance with what has been described above and within the radio frequency range of 10-250 MHz. Absorption as well as reflection is measured when the electromagnetic field has been emitted by means of an antenna mounted inside the dryer. By the reflection measurement the reflected signal is measured by the emitting antenna, and by absorption measurement one or more receiving antennas are mounted inside the dryer. The antennas have a natural frequency that is above the frequencies of the primary measuring spectrum.

The received frequency spectrum is further processed in accordance with the models described above, said models transforming spectral data to moisture content on line. A plurality of frequencies in the spectrum are used for this purpose.

A plurality of RF measurements are performed separately during a certain time period in order to obtain one or more measurements of a change of moisture content in the material during a given time period. Also the amount of energy/amount of heat that has been applied to the material or to the dryer device during a corresponding time period is registered. The measurement results are automatically introduced as data input to a computer unit arranged to, that is, equipped with software in order to establish the models for determining the moisture content and its change in the material. The computer unit is arranged to perform the moisture content measurement with regard to the amount of energy that actually has been added in order to evaporate a certain amount of liquid in the material.

The obtained moisture content/ratio, or more precisely, the change thereof, is then used in a control system for optimising the drying processing, with special regard to the moisture ratio upon fibre saturation and the final moisture ratio in the material. The term optimisation includes the optimising of any type of process parameters that are used.

It should be realised that the invention only has been described as to its principles and with reference to the proposed embodiments. Alternative embodiments will therefore be obvious for a man skilled in the art without thereby departing from the scope of the invention as defined in the annexed claims supported by the description.

For example, data input that has been given as an example for the respective models can be supplemented with further input data, for example the air humidity inside the drying chamber.

In advantageous cases also some of the data input mentioned above can be eliminated and, for example, the model for determining $FK_{in}$ may be included in the model for determining the moisture ratio. The adjustment parameter that has been elaborated by means of the model intended for this purpose will, however, always be used.

Further, it should also be emphasised that the terms moisture ratio and moisture content should be regarded as terms of equal value for describing the amount of liquid present in the material, although, per definition, there is a difference between them where: moisture ratio = (weight of damp wood/weight of dry wood)/(weight of dry wood) and moisture ratio = (weight of damp wood/weight of dry wood). Accordingly, it shall not be possible to go beside the claimed invention only by claiming that moisture ratio is measured instead of moisture content or vice versa.

**Claims**

1. Method for measuring the moisture content during drying of an organic material, by which the moisture content in the material is determined based on the dielectric properties of the material, and by which electromagnetic radiation is emitted towards a surface of the material, and where the determination of the moisture content is based on the effect of the material on the electromagnetic radiation, **characterised in that** a change of the effect of the material on the electromagnetic radiation versus time is detected, and that data input to a mathematical model for determining the moisture content of the material during the drying is determined from the amount of energy consumed for evaporation of liquid in connection to the drying process during a given time period.

2. A method according to claim 1, **characterised in that** said data input comprises an adjustment parameter JP obtained in accordance with:

$$JP = f(\text{spectral data, } FK_{in}, \text{ energy } (\Delta E))$$

where $FK_{in}$ is the initial moisture ratio of the drying load.

3. A method according to claim 1 or 2, **characterised in that** the model for determining the moisture content is a model of the type:

$$\text{Moisture ratio} = f(\text{spectral data, } Fk_{in}, JP, \text{ further input})$$

where further input relates to at least one of type of wood, drying volume, wood dimension, drying temperature and air flow in the drying chamber.

4. A method according to any one of claims 1-3, **characterised in that** said time period comprises a period during which generally all energy consumed for the drying is also consumed for the evaporation of liquid present in the material.

5. A method according to any one of claims 1-4, **characterised in that** said time period is a period during which the temperature in the material is generally constant when the applied energy/ time unit is constant.

6. A method according to claim 5, **characterised in that** said time period is before the point at which fibre saturation appears in the material.

7. A method according to any one of claims 5-6, **characterised in that** said time period is within an initial portion of the time period during which generally all energy consumed for the drying is also consumed for evaporation of liquid present in the material and/or during which the temperature in the material is generally constant when applied energy/time unit is constant.

8. A method according to any one of claims 1-7, **characterised in that** the electromagnetic radiation comprises a known first frequency spectrum, and that this spectrum is continuously or continually compared to a second frequency spectrum, formed by the effect of the material on the first frequency spectrum, in order to obtain spectral data.

9. A method according to claim 8, **characterised in that** the frequency spectrum mainly comprises wave lengths within the frequency range of 1-1000 MHz, preferably in the range of 1-500 MHz, and most preferably 10-250 MHz.

10. A method according to any one of claims 1-9, **characterised in that** radiation reflected by the material is detected and compared to the radiation that has been emitted towards the material in order to determine the effects of the material on the radiation.

11. A method according to any one of claims 1-10, **characterised in that** radiation transmitted through the material is detected and compared to the emitted radiation in order to determine the effect of the material on the radiation.

12. A method according to any one of claims 1-11, **characterised in that** the material comprises wood, preferably wood intended to be used as building timber.

13. A method according to any one of claims 1-12, **characterised in that** the moisture content that is determined for the material is introduced as data input into one or more existing models or devices for controlling the drying process.

14. A method according to any one of claims 1-13, **characterised in that** said model or models is/are used for controlling one or more process parameters in a drying process.

15. A device for measuring the moisture content during drying of an organic material, said device being equipped with means for determining the moisture content in the material based on the dielectric properties of the material, said means comprising means for emitting electromagnetic radiation towards the surface of the material, and the determination of the moisture content being , based on the effect of the material on said electromagnetic radiation, **characterised in that** it comprises

- means for detecting a change of the effect of the material on the electromagnetic radiation versus time, and
- means for establishing data input to a mathematical model for determining the moisture content of the material during the drying based on the amount of energy consumed for the evaporation of liquid in connection to the drying process during a given time period.

16. A device according to claim 15, **characterised in that** the means for emitting radiation towards the material comprises one or more antennas, each arranged to emit radiation with a known frequency spectrum towards the material.

17. A device according to claim 15 or 16, **characterised in that** it comprises means for detecting radiation that has been reflected by or transmitted through the material, and a unit for continuous or continual comparison of differences between spectral data for each emitted frequency spectrum and spectral data for the corresponding reflected or transmitted frequency spectrum, and evaluation of these differences for the determination of the moisture content of the material.

18. A device according to claim 17, **characterised in that** the unit for comparison and evaluation comprises a neural network and/or an electronic unit with a software for Partial Least Square regression, PLS.

19. A device according to any one of claims 15-18, **characterised in that** the means for establishing data input to the mathematical model comprises an electronic unit with a software adapted to compare changes during time of the moisture content value that is determined and the amount of liquid that, during a corresponding time, has been forced to evaporate in connection to the drying of the material.

**Patentansprüche**

1. Verfahren zum Messen des Feuchtigkeitsgehalts während des Trocknens eines organischen Materials, durch welches der Feuchtigkeitsgehalt in dem Material basierend auf den dielektrischen Eigenschaften des Materials bestimmt wird, und durch welches elektromagnetische Strahlung auf die Oberfläche des Materials emittiert wird, und wobei die Bestimmung des Feuchtigkeitsgehalts auf dem Effekt des Materials auf die elektromagnetische Strahlung basiert, **dadurch gekennzeichnet, dass** eine Veränderung des Effekts des Materials auf die elektromagnetische Strahlung verglichen mit der Zeit erfasst wird, und dass eine Dateneingabe an ein mathematisches Modell für das Bestimmen des Feuchtigkeitsgehalts des Materials während des Trocknens aus der Energiemenge bestimmt wird, die für die Evaporation einer Flüssigkeit in Verbindung zu dem Trocknungsprozess während einer gegebenen Zeitspanne verbraucht wird.

2. Ein Verfahren nach Anspruch 1, **dadurch gekennzeichnet, dass** besagte Dateneingabe einen Anpassungsparameter JP umfasst, der gemäß

$$JP = f(\text{Spektraldaten}, FK_{in}, \text{Energie } (\Delta E))$$

erhalten wird, wobei $FK_{in}$ der anfängliche Feuchtigkeitsanteil der Trocknungsladung ist.

3. Ein Verfahren nach einem der Ansprüche 1 oder 2, **dadurch gekennzeichnet, dass** das Modell zum Bestimmen des Feuchtigkeitsgehalts ein Modell des Typs

$$\text{Feuchtigkeitsanteil} = f(\text{Spektraldaten}, FK_{in}, JP, \text{weitere Eingabe})$$

ist, wobei weitere Eingabe sich auf mindestens eines von Holzart, Trocknungsvolumen, Holzdimension, Trocknungstemperatur und Luftfluss in die Trocknungskammer bezieht.

**4.** Ein Verfahren nach einem der Ansprüche 1-3, **dadurch gekennzeichnet, dass** besagte Zeitspanne eine Spanne umfasst, während welcher hauptsächlich alle für das Trocknen verbrauchte Energie auch für die Evaporation von in dem Material vorhandener Flüssigkeit verbraucht wird.

**5.** Ein Verfahren nach einem der Ansprüche 1-4, **dadurch gekennzeichnet, dass** besagte Zeitspanne eine Spanne ist, während welcher die Temperatur in dem Material hauptsächlich konstant ist, wenn die zugeführte Energie/Zeiteinheit konstant ist.

**6.** Ein Verfahren nach Anspruch 5, **dadurch gekennzeichnet, dass** besagte Zeitspanne vor dem Punkt ist, bei welchem in dem Material Fasersättigung auftritt.

**7.** Ein Verfahren nach einem der Ansprüche 5-6, **dadurch gekennzeichnet, dass** besagte Zeitspanne innerhalb eines anfänglichen Teils der Zeitspanne ist, während welcher hauptsächlich alle für das Trocknen verbrauchte Energie auch für die Evaporation von in dem Material vorhandener Flüssigkeit verbraucht wird und/oder während welcher die Temperatur in dem Material hauptsächlich konstant ist, wenn die zugeführte Energie/Zeiteinheit konstant ist.

**8.** Ein Verfahren nach einem der Ansprüche 1-7, **dadurch gekennzeichnet, dass** die elektromagnetische Strahlung ein bekanntes erstes Frequenzspektrum umfasst, und dass dieses Spektrum fortwährend oder fortgesetzt mit einem zweiten Frequenzspektrum verglichen wird, das durch den Effekt des Materials auf das erste Frequenzspektrum gebildet wird, um Spektraldaten zu erhalten.

**9.** Ein Verfahren nach Anspruch 8, **dadurch gekennzeichnet, dass** das Frequenzspektrum im Wesentlichen Wellenlängen innerhalb des Frequenzbereichs von 1-1000 MHz umfasst, vorzugsweise in dem Bereich von 1-500 MHz, und am meisten bevorzugt 10-250 MHz.

**10.** Ein Verfahren nach einem der Ansprüche 1-9, **dadurch gekennzeichnet, dass** durch das Material reflektierte Strahlung erfasst und mit der Strahlung verglichen wird, die auf das Material emittiert worden ist, um die Effekte des Materials auf die Strahlung zu bestimmen.

**11.** Ein Verfahren nach einem der Ansprüche 1-10, **dadurch gekennzeichnet, dass** durch das Material hindurch transmittierte Strahlung erfasst und mit der emittierten Strahlung verglichen wird, um den Effekt des Materials auf die Strahlung zu bestimmen.

**12.** Ein Verfahren nach einem der Ansprüche 1-11, **dadurch gekennzeichnet, dass** das Material Holz umfasst, vorzugsweise Holz, das zur Benutzung als Bauholz beabsichtigt ist.

**13.** Ein Verfahren nach einem der Ansprüche 1-12, **dadurch gekennzeichnet dass** der Feuchtigkeitsgehalt, der für das Material bestimmt wird, als Dateneingabe in eines oder mehrere existierende Modelle oder Geräte zum Steuern des Trocknungsprozesses eingeführt wird.

**14.** Ein Verfahren nach einem der Ansprüche 1-13, **dadurch gekennzeichnet, dass** besagtes Modell oder besagte Modelle zum Steuern von einem oder mehreren Prozessparametern in einem Trocknungsprozess verwendet wird/werden.

**15.** Ein Gerät zum Messen des Feuchtigkeitsgehalts während des Trocknens eines organischen Materials, wobei besagtes Gerät mit einem Mittel zur Bestimmung des Feuchtigkeitsgehalts in dem Material basierend auf dielektrischen Eigenschaften des Materials ausgerüstet ist, wobei besagtes Mittel ein Mittel zum Emittieren elektromagnetischer Strahlung auf die Oberfläche des Materials umfasst, und die Bestimmung des Feuchtigkeitsgehalts auf dem Effekt des Materials auf besagte elektromagnetische Strahlung basiert, **dadurch gekennzeichnet, dass** es umfasst:

- ein Mittel zum Erfassen einer Änderung des Effekts des Materials auf die elektromagnetische Strahlung verglichen mit der Zeit, und

- ein Mittel zum Erstellen von Dateneingabe in ein mathematisches Modell zum Bestimmen des Feuchtigkeitsgehalts des Materials während des Trocknens basierend auf der Energiemenge, die für die Evaporation von Flüssigkeit in Verbindung mit dem Trocknungsprozess während einer gegebenen Zeitspanne verbraucht wird.

16. Ein Gerät nach Anspruch 15, **dadurch gekennzeichnet, dass** das Mittel zum Emittieren von Strahlung auf das Material eine oder mehrere Antennen umfasst, von denen jede eingerichtet ist, Strahlung mit einem bekannten Frequenzspektrum auf das Material zu emittieren.

17. Ein Gerät nach Anspruch 15 oder 16, **dadurch gekennzeichnet, dass** es ein Mittel zum Erfassen von Strahlung umfasst, die durch das Material reflektiert oder durch das Material hindurch transmittiert worden ist, und eine Einheit für fortwährenden oder fortgesetzten Vergleich von Differenzen zwischen Spektraldaten für jedes emittierte Frequenzspektrum und Spektraldaten für das korrespondierende reflektierte oder transmittierte Frequenzspektrum, und Auswertung dieser Differenzen für die Bestimmung des Feuchtigkeitsgehalts des Materials.

18. Ein Gerät nach Anspruch 17, **dadurch gekennzeichnet, dass** die Einheit für Vergleich und Auswertung ein neurales Netzwerk und/oder eine elektronische Einheit mit einer Software für Partial-Least-Square-Regression, PLS, umfasst.

19. Ein Gerät nach einem der Ansprüche 15-18, **dadurch gekennzeichnet, dass** das Mittel zum Erstellen von Dateneingabe in das mathematische Modell eine elektronische Einheit mit einer Software umfasst, die eingerichtet ist, zeitliche Änderungen des Feuchtigkeitsgehaltswerts, der bestimmt wird, und der Flüssigkeitsmenge zu vergleichen, welche während einer korrespondierenden Zeit in Verbindung mit dem Trocknen des Materials zu evaporieren gezwungen worden ist.

## Revendications

1. Procédé de mesure de la teneur en humidité pendant le séchage d'un matériau organique, par lequel la teneur en humidité du matériau est déterminée à partir des propriétés diélectriques du matériau, et par lequel un rayonnement électromagnétique est envoyé vers une surface du matériau, et où la détermination de la teneur en humidité est basée sur l'effet de la matériau sur le rayonnement électromagnétique, **caractérisé en ce qu'**un changement de l'effet du matériau sur le rayonnement électromagnétique en fonction du temps est détecté, et **en ce qu'**une entrée de données dans un modèle mathématique pour déterminer la teneur en humidité du matériau pendant le séchage est déterminée d'après la quantité d'énergie consommée pour l'évaporation du liquide en liaison avec le procédé de séchage pendant une période de temps donnée.

2. Procédé selon la revendication 1, **caractérisé en ce que** ladite entrée de données comprend un paramètre de réglage JP obtenu selon :

$$JP = f(\text{données spectrales}, Fk_{in}, \text{énergie } (\Delta E)$$

où $Fk_{in}$ est le rapport d'humidité initial de la charge de séchage.

3. Procédé selon la revendication 1 ou 2, **caractérisé en ce que** le modèle permettant de déterminer la teneur en humidité est un modèle du type :

$$\text{Rapport d'humidité} = f(\text{données spectrales}, Fk_{in}, JP, \text{autre entrée})$$

où une autre entrée se rapporte à au moins un élément parmi le type de bois, le volume de séchage, la dimension du bois, la température de séchage et l'écoulement d'air dans la chambre de séchage.

4. Procédé selon l'une quelconque des revendications 1 à 3, **caractérisé en ce que** ladite période de temps comprend une période pendant laquelle généralement toute l'énergie consommée pour le séchage est également consommée pour l'évaporation du liquide présent dans le matériau.

**5.** Procédé selon l'une quelconque des revendications 1 à 4, **caractérisé en ce que** ladite période de temps est une période pendant laquelle la température du matériau est généralement constante lorsque l'unité énergie/temps appliquée est constante.

**6.** Procédé selon la revendication 5, **caractérisé en ce que** ladite période de temps se situe avant le moment auquel une saturation des fibres apparaît dans le matériau.

**7.** Procédé selon l'une quelconque des revendications 5 à 6, **caractérisé en ce que** ladite période de temps se trouve dans une partie initiale de la période de temps pendant laquelle généralement toute l'énergie consommée pour le séchage est également consommée pour l'évaporation du liquide présent dans le matériau et/ou pendant laquelle la température du matériau est généralement constante lorsque l'unité énergie/temps appliquée est constante.

**8.** Procédé selon l'une quelconque des revendications 1 à 7, **caractérisé en ce que** le rayonnement électromagnétique comprend un premier spectre de fréquences connu, et **en ce que** ce spectre est comparé de façon continue ou continuelle à un deuxième spectre de fréquences, formé par l'effet du matériau sur le premier spectre de fréquences, afin d'obtenir des données spectrales.

**9.** Procédé selon la revendication 8, **caractérisé en ce que** le spectre de fréquences comprend principalement des longueurs d'onde comprises dans la gamme de fréquences de 1 à 1000 MHz, de préférence dans la gamme de 1 à 500 MHz, et mieux de 10 à 250 MHz.

**10.** Procédé selon l'une quelconque des revendications 1 à 9, **caractérisé en ce que** le rayonnement renvoyé par le matériau est détecté et comparé au rayonnement qui a été envoyé vers le matériau afin de déterminer les effets du matériau sur le rayonnement.

**11.** Procédé selon l'une quelconque des revendications 1 à 10, **caractérisé en ce que** le rayonnement transmis par le matériau est détecté et comparé au rayonnement émis afin de déterminer l'effet du matériau sur le rayonnement.

**12.** Procédé selon l'une quelconque des revendications 1 à 11, **caractérisé en ce que** le matériau comprend du bois, de préférence du bois destiné être utilisé comme bois de charpente.

**13.** Procédé selon l'une quelconque des revendications 1 à 12, **caractérisé en ce que** la teneur en humidité qui est déterminée pour le matériau est introduite sous forme d'entrée de données dans un ou plusieurs modèles ou dispositifs existants destinés à commander le procédé de séchage.

**14.** Procédé selon l'une quelconque des revendications 1 à 13, **caractérisé en ce que** ledit ou lesdits modèle(s) est/ sont utilisé(s) pour commander un ou plusieurs paramètres de traitement dans un procédé de séchage.

**15.** Dispositif de mesure de la teneur en humidité pendant le séchage d'un matériau organique, ledit dispositif étant équipé d'un moyen pour déterminer la teneur en humidité du matériau à partir des propriétés diélectriques du matériau, ledit moyen comprenant un moyen pour émettre un rayonnement électromagnétique vers la surface du matériau, et la détermination de la teneur en humidité étant basée sur l'effet du matériau sur ledit rayonnement électromagnétique, **caractérisé en ce qu'**il comprend

- un moyen pour détecter un changement de l'effet du matériau sur le rayonnement électromagnétique en fonction du temps, et
- un moyen pour établir une entrée de données dans un modèle mathématique pour déterminer la teneur en humidité du matériau pendant le séchage en s'appuyant sur la quantité d'énergie consommée pour l'évaporation du liquide en liaison avec le procédé de séchage pendant une période de temps donnée.

**16.** Dispositif selon la revendication 15, **caractérisé en ce que** le moyen destiné à émettre un rayonnement vers le matériau comprend une ou plusieurs antennes, chacune étant disposée pour émettre un rayonnement ayant un spectre de fréquences connu vers le matériau.

**17.** Dispositif selon la revendication 15 ou 16, **caractérisé en ce qu'**il comprend un moyen pour détecter le rayonnement qui a été renvoyé par ou transmis par le matériau, et une unité pour effectuer une comparaison continue ou continuelle des différences entre des données spectrales pour chaque spectre de fréquences émis et des données spectrales pour le spectre de fréquences renvoyé ou transmis correspondant, et une évaluation de ces différences afin de déterminer la teneur en humidité du matériau.

**18.** Dispositif selon la revendication 17, **caractérisé en ce que** l'unité de comparaison et d'évaluation comprend un réseau neuronal et/ou une unité électronique ayant un logiciel de régression PLS (« Partial Least Squares », moindres carrés partiels).

**19.** Dispositif selon l'une quelconque des revendications 15 à 18, **caractérisé en ce que** le moyen permettant d'établir une entrée de données dans le modèle mathématique comprend une unité électronique ayant un logiciel adapté pour comparer des changements pendant un temps de la valeur de teneur en humidité qui est déterminée et de la quantité de liquide qui, pendant un temps correspondant, a été amenée à s'évaporer en liaison avec le séchage du matériau.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 97008288